Europäisches Patentamt

(19) European Patent Office

Office européen des brevets

(11) Publication number: **0 079 917**
**B1**

(12) EUROPEAN PATENT SPECIFICATION

(45) Date of publication of patent specification: **04.03.87**

(51) Int. Cl.⁴: **B 60 R 1/08**

(21) Application number: **82901604.7**

(22) Date of filing: **04.06.82**

(86) International application number:
**PCT/GB82/00166**

(87) International publication number:
**WO 82/04229 09.12.82 Gazette 82/29**

(54) **OPTICAL DEVICE FOR IMPROVING THE REAR VIEW IN AUTOVEHICLES.**

(30) Priority: **04.06.81 GB 8117092**

(43) Date of publication of application:
**01.06.83 Bulletin 83/22**

(45) Publication of the grant of the patent:
**04.03.87 Bulletin 87/10**

(84) Designated Contracting States:
**DE FR GB SE**

(56) References cited:
**DE-A-2 127 164**
**DE-A-2 257 774**
**DE-A-2 358 108**
**US-A-3 809 462**
**US-A-3 826 562**
**US-A-3 861 785**
**US-A-3 972 596**
**US-A-4 187 001**

(73) Proprietor: **FOX, Arnold Jeffrey**
**58 Stanhope Avenue**
**London, N3 3NA (GB)**

(72) Inventor: **FOX, Arnold Jeffrey**
**58 Stanhope Avenue**
**London, N3 3NA (GB)**

(74) Representative: **Bardo, Julian Eason et al**
**Abel & Imray Northumberland House**
**303-306 High Holborn**
**London, WC1V 7LH (GB)**

Courier Press, Leamington Spa, England.

## Description

The invention relates to optical devices of the type for deflecting fields of view, and more particularly to an optical device for mounting on a rear window of a motor vehicle for deflecting a driver's field of view to allow the driver to view through the device downwards beyond the rear of the vehicle.

British patent specification No. 1418045 shows examples of devices for expanding and deflecting fields of view using a complete Fresnel lens combined with a Fresnel prism, the lens expanding the field of view and the prism carrying out deflection of the field of view.

DE—A—2358108, on which the precharacterizing clause of claim 1 is based, describes various devices developed from DE—A—2257774 for improving the field of view of a driver. The devices comprise Fresnel lenses and the specification states that a Fresnel lens cut at right-angles may be used, in which case the optical centre of the lens need not be at the point of intersection of the rectangle. The Fresnel lenses are fastened to the rear window and/or to the rear-view mirror of the motor vehicle. The specification states that for example by means of the Fresnel lenses attached to the approximately vertical rear window or to his outer rear-view mirror directed backwards, a bus driver can practially see the ground behind his vehicle in the inner mirror.

The invention provides an optical device for mounting on a rear window of a motor vehicle for deflecting a driver's field of view to allow the driver to view through the device downwards beyond the rear of the vehicle, the device comprising part only of a Fresnel lens having a negative focal length, the optical centre of which is spaced from the geometric centre, characterised in that the optical centre of the lens part lies at or adjacent an edge of the lens, said edge being hingedly connected to mounting means for mounting the device on the rear window, whereby, when the mounting means is mounted on the rear window, the lens part can be angularly adjusted about the mounting means to lie in a substantially vertical plane with said edge defining the upper edge of the lens part.

The device of the invention may be manufactured simply and easily and enables the driver of a motor vehicle to reverse up to an object, such as another car without fear of hitting it. The device can be made small enough so that when mounted in the region of an upper corner of the rear window of the vehicle the driver's normal rear vision is unimpaired. The device is suitable for use on any motor vehicle having a rear window irrespective of the rake of the rear window.

The lens may include more than one Fresnel lens element lying one on top of another each element having a negative focal length and the optical centre of each lying at or adjacent said edge of the lens. In this way, for example, two lens elements which individually produce a deviation of a particular angle would produce a combined deviation of double that particular angle.

The lens part preferably comprises substantially a quadrant of a Fresnel lens. The quadrant may be a rectangle and the optical centre of the lens part may be at one corner thereof.

The mounting means may be hingedly connected to the lens part by a bendable element which has sufficient rigidity to support the lens part in the desired position, or by a stiff hinge, or by a hinge and means to clamp the hinge in a desired position. The clamping means may comprise an adjustable clamp arm.

The invention further provides a motor vehicle having a rear window and an optical device as defined above mounted in the region of an upper corner of the rear window.

By way of example, one embodiment of a view deflecting device and a modification thereto according to the invention will now be described with reference to the accompanying drawings, in which:—

Fig. 1 is a view illustrating an embodiment of a view deflecting device;

Fig. 2 is a schematic side view of a vehicle illustrating the positioning of the view deflecting device of Fig. 1;

Fig. 3 is a schematic plan view of part of the motor vehicle of Fig. 2;

Figs. 4A, 4B, and 4C are three views showing how the device of Fig. 1 is to be fitted to vehicle rear windscreens of different rakes; and

Figs. 5A and 5B show schematically a modified adjustable support for the view deflecting device.

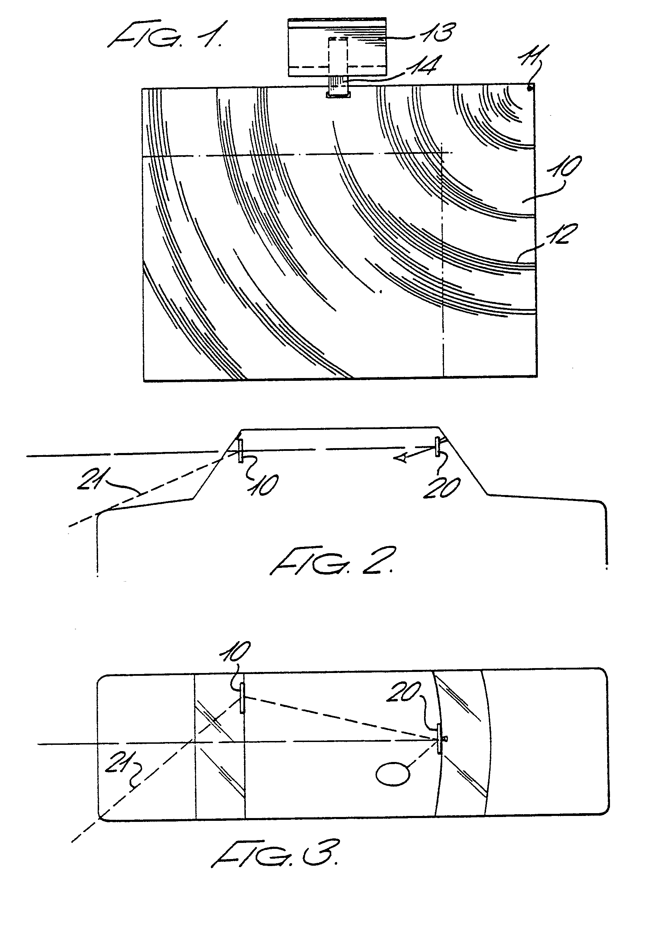

Fig. 1 shows a lens part 10 which is rectangular in overall shape. The rectangle is part of a quadrant of a Fresnel lens having an angle of deviation of up to 50°. The optical centre 11 of the Fresnel lens is at one corner of the rectangle and concentric groove formations 12 which give the Fresnel lens its optical properties cover the surface of the rectangle. The rectangular part 10 of the Fresnel lens is of plastics material, although it will be appreciated that other materials could be used. It will be appreciated that, although the optical centre 11 is shown at a corner of the rectangular lens part 10, the centre could be at other positions adjacent the edge. For example, the rectangle defined by the chain lines in Figure 1 would operate effectively as a view deflecting device and the term "adjacent" the edge is intended to cover such a configuration.

The lens part 10 was described above as being formed from part of a single Fresnel lens. It will be appreciated that a device of a particular angle of deviation could also be made by taking two Fresnel lens elements each of which would deviate by half the desired angle and laying the two lens elements one on the other. Superimposition of lens elements in this way can, however, reduce the clarity of image formed.

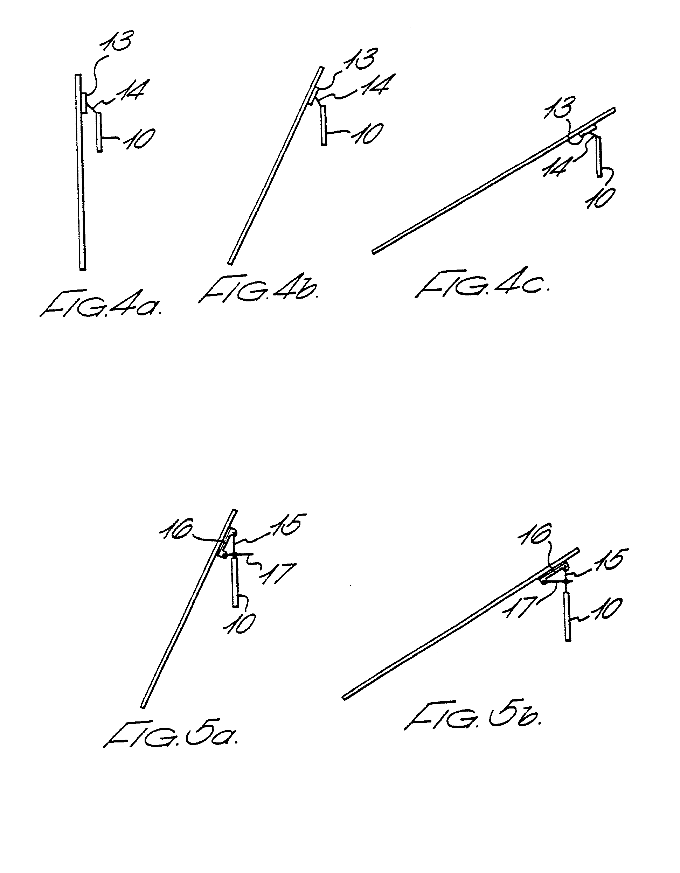

Mounting means in the form of an adhesive pad 13 is attached to the lens part 10 by a bendable metal strip 14. The strip 14 has sufficient rigidity to retain a desired configuration once deformed. Figs. 4A, 4B and 4C show different configurations of the view deflecting device when mounted on vehicle rear windscreens of different rake. To work satisfactorily, the Fresnel lens part 10 must be perpendicular to the line of sight, and in Fig. 4A the device is shown mounted on a vertical rear windscreen, in Fig. 4B the device is shown mounted on a steeply raked rear windscreen and in Fig. 4C the device is shown mounted on a gently raked rear windscreen. It will be appreciated that there are alternatives to adhesive pads for mounting the device; for example, a suction pad could be used.

There are various alternatives to the bendable metal strip 14 for allowing adjustment of the position of the Fresnel lens part. For example, a stiff hinge of plastics material or a hinge having high friction resistance could be used. A further alternative is shown in Figs. 5A and 5B where a three part clip supports the lens part. The three part clip has a first element 15 attached rigidly to the lens portion, a second element 16 which in use is attached to the rear windsscreen 17 and freely hinged to the first element 15 and a third locking element 17 edgedly attached to the second element 16 for clamping the first element 15 in a desired configuration. Figs. 5A and 5B show two alternative configurations of the three part clip.

Figs. 2 and 3 illustrate where the device should be positioned in a vehicle and also how the line of sight of the driver is deflected. It will be appreciated that Figs. 2 and 3 are schematic views. The Fresnel lens part must be large enough to enable the driver to see clearly large sections of objects he is reversing towards, otherwise the image becomes difficult to interpret. The most convenient position for the optical device is in the top corner of the rear windscreen on the side opposite that to which the field of view is being deflected. Thus a Fresnel lens quadrant which diverts the field of view towards the right hand side of a vehicle would be positioned in the top left hand corner of the rear windscreen. Conversely, if a driver wishes to be able to see the rear left hand side of his vehicle and what is being approached by it, the device would be one which deflects the field of view to the right and would be positioned in the top right hand corner of the rear windscreen. it may be advantageous to position two devices, one in each top corner of the rear windscreen. To make use of the device or devices, the driver can conveniently adjust his angle of vision in the rear view mirror 20 until he can see the device. The line of sight 21 in side view and plan view is shown in Figs. 2 and 3 respectively. The effect of the device is to enable a driver to reverse a vehicle as if he was kneeling on the vehicle back seat looking out of the rear window. Even if a whole Fresnel lens were located in the above position in a vehicle rear window, only the selected quadrant would be used by a driver to achieve the desired deflection of view.

The advantage of this embodiment of the invention is that a device is provided which is simple and easy to manufacture and enables the driver of a motor vehicle with a rear window to reverse up to an object, such as another car, without fear of hitting it. The device is small enough to leave the driver's normal rear vision unimpaired, a typical size for the device being about 10 cm × 7.6 cm (4" × 3") and is suitable for use on any motor vehicle having a rear window irrespective of the rake of the rear window.

## Claims

1. An optical device for mounting on a rear window of a motor vehicle for deflecting a driver's field of view to allow the driver to view through the device downwards beyond the rear of the vehicle, the device comprising part only of a Fresnel lens (10) having a negative focal length, the optical centre (11) of which is spaced from the geometric centre, characterised in that the optical centre (11) of the lens part (10) lies at or adjacent an edge of the lens, said edge being hingedly connected to mounting means (13) for mounting the device on a rear window, whereby, when the mounting means (13) is mounted on the rear window, the lens part (10) can be angularly adjusted about the mounting means to lie in a substantially vertical plane with said edge defining the upper edge of the lens part.

2. A device as claimed in claim 1 further characterised in that the lens part (10) includes more than one Fresnel lens element lying one on top of another, each element having a negative focal length and the optical centre (11) of each lying at or adjacent said edge of the lens.

3. A device as claimed in claim 1 or 2 further characterised in that the lens part (10) comprises substantially a quadrant of a Fresnel lens.

4. A device as claimed in claim 3 further characterised in that the quadrant is a rectangle and the optical centre (11) of the lens part (10) is at one corner thereof.

5. A device as claimed in any preceding claim further characterised in that the mounting means (13) is hingedly connected to the lens part (10) by a bendable element (14) which has sufficient rigidity to support the lens part (10) in the desired position.

6. A device as claimed in any of claims 1 to 4 further characterised in that the mounting means (13) is hingedly connected to the lens part (10) by a stiff hinge.

7. A device as claimed in any of claims 1 to 4 further characterised in that the mounting means (13) is hingedly connected to the lens part (10) by a hinge and means (17) to clamp the hinge in a desired position are provided.

8. A device as claimed in claim 7 in which the clamping means (17) comprises an adjustable clamp arm.

9. A device as claimed in any preceding claim further characterised in that the mounting means (13) includes an adhesive pad for fixing the device to the rear window.

10. A motor vehicle having a rear window and an optical device as claimed in any preceding claim mounted in the region of an upper corner of the rear window.

## Patentansprüche

1. Optische Vorrichtung zum Montieren auf einer Heckscheibe eines Kraftfahrzeuges zum Ablenken des Gesichtsfeldes des Fahrers, um es dem Fahrer zu erlauben, durch die Vorrichtung abwärts über das Heck des Fahrzeugs zu sehen, wobei die Vorrichtung einen Ausschnitt mit einer Fresnel-Linse (10) mit negativer Brennweite umfaßt, deren optischer Mittelpunkt (11) mit Abstand zum geometrischen Mittelpunkt angeordnet ist, dadurch gekennzeichnet, daß der optische Mittelpunkt (11) des Linsenausschnitts (10) an oder benachbart zu einer Kante der Linse liegt, wobei die besagte Kante schwenkbar mit Montagemitteln (13) zum Montieren der Vorrichtung auf der Heckscheibe verbunden ist, wobei, wenn die Montagemittel (13) auf der Heckscheibe montiert sind, der Linsenausschnitt (10) winkelmäßig um die Montagemittel eingestellt werden kann, um in einer im wesentlichen vertikalen Ebene mit der besagten Kante, die die Oberkante des Linsenausschnitts definiert, zu liegen.

2. Vorrichtung wie in Anspruch 1 beansprucht, weiter dadurch gekennzeichnet, daß der Linsenausschnitt (10) mehr als ein Fresnel-Linsenelement umfaßt, wobei eines über dem anderen liegt und jedes Element eine negative Brennweite aufweist und der optische Mittelpunkt (11) von jedem an oder benachbart zu der besagten Kante der Linse liegt.

3. Vorrichtung wie in Anspruch 1 oder 2 beansprucht, weiter dadurch gekennzeichnet, daß der Linsenausschnitt (10) im wesentlichen einen Quadranten einer Fresnel-Linse umfaßt.

4. Vorrichtung wie in Anspruch 3 beansprucht, weiter dadurch gekennzeichnet, daß der Quadrant ein Rechteck und das optische Zentrum (11) des Linsenausschnitts (10) an einer Ecke hiervon ist.

5. Vorrichtung wie in irgendeinem vorhergehenden Anspruch beansprucht, weiter dadurch gekennzeichnet, daß die Montagemittel (13) schwenkbar mit dem Linsenausschnitt (10) durch ein beigbares Element (14) verbunden sind, das genügend Festigkeit aufweist, um den Linsenausschnitt (10) in der gewünschten Position zu halten.

6. Vorrichtung wie in irgendeinem der Ansprüche 1 bis 4 beansprucht, weiter dadurch gekennzeichnet, daß die Montagemittel (13) schwenkbar mit dem Linsenausschnitt (10) durch ein starres Gelenk verbunden sind.

7. Vorrichtung wie in irgendeinem der Ansprüche 1 bis 4 beansprucht, weiter dadurch gekennzeichnet, daß die Montagemittel (13) schwenkbar mit dem Linsenausschnitt (10) durch ein Gelenk verbunden sind und Mittel (17), um das Gelenk in einer gewünschten Position festzuklemmen, vorgesehen sind.

8. Vorrichtung wie in Anspruch 7 beansprucht, bei der die Klemmeinrichtung (17) einen einstellbaren Klemmarm umfaßt.

9. Vorrichtung wie in irgendeinem vorhergehenden Anspruch beansprucht, weiter dadurch gekennzeichnet, daß die Montagemittel (13) einen Klebstreifen zum Befestigen der Vorrichtung an der Heckscheibe umfassen.

10. Kraftfahrzeug mit einer Heckscheibe und einer optische Einrichtung wie in irgendeinem vorhergehenden Anspruch beansprucht, die in dem Bereich einer oberen Ecke der Heckscheibe montiert ist.

## Revendications

1. Un dispositif optique destiné à être monté sur une lunette arrière d'un véhicule automobile pour dévier un champ de vision d'un conducteur afin de permettre à ce conducteur de regarder vers le bas au delà de l'arrière du véhicule par l'intermédiaire du dispositif, le dispositif comprenant une partie seulement d'une lentille de Fresnel (10) comportant une distance focale négative et dont le centre optique (11) est espacé du centre géométrique, caractérisé en ce que le centre optique (11) de la partie de lentille (10) est placé sur ou adjacent à un bord de la lentille, ledit bord étant relié de façon articulée à un moyen de montage (13) servant à supporter le dispositif sur la lunette arrière de façon que, lorsque le moyen de montage (13) est monté sur la lunette arrière, la partie de lentille (10) puisse être réglée angulairement autour du moyen de montage afin d'être placée dans un plan sensiblement vertical, ledit bord définissant le bord supérieur de la partie de lentille.

2. Un dispositif tel que revendiqué dans la revendication 1, caractérisé en outre en ce que la partie de lentille (10) comprend plus d'un élément de lentille de Fresnel les éléments étant placés l'un sur l'autre et chaque élément ayant une distance focale négative et son centre optique (11) étant placé sur ou adjacent audit bord de la lentille.

3. Un dispositif tel que revendiqué dans la revendication 1 ou 2, caractérisé en outre en ce que la partie de lentille (10) comprend dans l'essentiel un quadrant d'un lentille de Fresnel.

4. Un dispositif tel que revendiqué dans la revendication 3, caractérisé en outre en ce que le quadrant est un rectangle et le centre optique (11) de la partie de lentille (10) est situé dans une coin de celle-ci.

5. Un dispositif tel que revendiqué dans une des quelconque des revendications précédentes, caractérisé en outre en ce que le moyen de montage (13) est relié de façon articulée à la partie de lentille (10) par un élément souple (14) qui a une rigidité suffisante pour supporter la partie de lentille (10) dans la position désirée.

6. Un dispositif tel que revendiqué dans une des quelconque des revendications 1 à 4, caractérisé en outre en ce que le moyen de montage (13) est relié de façon articulée à la partie de lentille (10) par une charnière rigide.

7. Un dispositif tel que revendiqué dans une des quelconque des revendications 1 à 4, caractérisé en outre en ce que le moyen de montage (13) est relié de façon articulée à la partie de lentille (10) par une charnière et il est prévu des moyens (17) pour bloquer la charnière dans une position désirée.

8. Un dispositif tel que revendiqué dans la revendication 7, dans lequel les moyens de blocage (17) comprennent un bras de blocage réglable.

9. Un dispositif tel que revendiqué dans une quelconque des revendications précédentes, caractérisé en outre en ce que le moyen de montage (13) comprend un tampon adhésif pour fixer le dispositif sur la lunette arrière.

10. Un véhicule automobile comportant une lunette arrière et un dispositif optique tel que revendiqué dans une quelconque des revendications précédentes et monté dans la zone d'un coin supérieur de la lunette arrière.

0 079 917

FIG. 1.

13

14

11

10

12

FIG. 2.

21

10

20

FIG. 3.

10

20

21

1

FIG.4a.

FIG.4b.

FIG.4c.

FIG.5a.

FIG.5b.